# EUROPÄISCHE PATENTSCHRIFT

(11) **EP 2 558 762 B1**
(45) Veröffentlichungstag und Bekanntmachung des Hinweises auf die Patenterteilung: **11.01.2017**
(21) Anmeldenummer: 11715413.8
(22) Anmeldetag: 11.04.2011
(51) Int. Cl.: F16L 21/08, F16L 35/00, F16L 47/12, F16L 55/11, F16J 13/04

(54) **VERBINDUNG ZWISCHEN EINEM ROHR UND EINEM ROHRBAUTEIL**
CONNECTION BETWEEN A PIPE AND A PIPE COMPONENT
RACCORDEMENT ENTRE UN TUYAU ET UN ÉLÉMENT DE TUYAU

(30) Priorität: 14.04.2010 DE 102010014964
(43) Veröffentlichungstag der Anmeldung: 20.02.2013
(73) Patentinhaber: Rehau AG + Co, 95111 Rehau (DE)
(72) Erfinder: HEINRICH, Gerhard, 91362 Pretzfeld (DE)
(86) Internationale Anmeldenummer: PCT/EP2011/001783
(87) Internationale Veröffentlichungsnummer: WO 2011/128050

(56) Entgegenhaltungen:
- DE-A1- 4 437 249
- DE-A1- 19 958 022
- DE-C- 74 812
- DE-U1- 29 520 072
- DE-U1- 29 613 062
- GB-A- 2 012 385
- US-A- 6 065 784

## Beschreibung

Die vorliegende Erfindung bezieht sich auf eine Verbindung zwischen einem Rohr mit einer Steckmuffe und einem Rohrbauteil mit einem in die Steckmuffe eingesteckten Spitzende, wobei die Verbindung eine derartige Vorrichtung zur axialen Fixierung umfasst.

Eine solche Verbindung ist zum Beispiel aus der GB 2 012 385 A bekannt. Spezieller wird eine Vorrichtung beschrieben, mit der Rohre, insbesondere Kunststoffrohre, miteinander verbunden und aneinander fixiert werden bzw. derartige Rohre mit einem Muffenstopfen verbunden und dieser an der Muffe axial festgelegt wird. Dabei wird ein Ende des Rohres bzw. des Muffenstopfens, das als Spitzende bezeichnet wird, in eine Rohrmuffe eingeschoben. Bei einer derartigen Verbindung erfolgt die Abdichtung durch mindestens einen Dichtring, der im Bereich der Steckmuffe in das Rohr integriert ist. Durch eine derartige Konstruktion ist eine Fixierung der Verbindung in axialer Richtung nur in geringem Maße ausgeprägt. Bei Abflussrohren und insbesondere bei Kunststoffabflussrohren ist es erforderlich, diese nachträglich gegen ein unbeabsichtigtes Auseinanderziehen in axialer Richtung zu sichern.

Gemäß dem Stand der Technik werden bei Druckwasserrohren metallische Krallen oder Klammern auf die Verbindung aufgesetzt, wobei diese Krallen oder Klammern einen hohen Raumanspruch besitzen und derart ausgestaltet sind, dass sie nur bei Rohren mit großen Wandstärken zum Einsatz kommen können. Im Gegensatz dazu sind Abflussrohre aus Kunststoff dünnwandig ausgestaltet und zu ihrer Verlegung steht nur ein sehr beschränkter Raum zur Verfügung, was den Einsatz der im Stand der Technik bekannten Klammern oder Krallen ausschließt.

Zur Verwendung bei Kunststoffabflussrohren schlägt die DE 20 2005 019 635 U1 eine Rohrverbindungsvorrichtung zur formschlüssigen Verbindung zweier Kunststoffrohre vor, von denen eines eine Steckmuffe und das andere ein in die Steckmuffe eingesetztes Spitzende umfasst, wobei die Rohrverbindungsvorrichtung zwei halbschalenartige Halteelemente umfasst, die zumindest einen Teilbereich der Steckmuffe und des Spitzendes umgreifen und gegeneinander vorspannbar sind, wobei das Haltelement aus Kunststoff gefertigt ist und zumindest ein über eine teilzylindrische Auflagefläche, die gegen die Außenfläche des Spitzendes anlegbar ist, radial nach innen ragendes Krallelement aufweist.

Eine derartige Verbindungsvorrichtung ist jedoch nur zur Verbindung zweier Rohre geeignet. Darüber hinaus schädigt eine derartige Rohrverbindungsvorrichtung bei ihrer Montage die Rohrwandungen und führt damit zu einer Rohrschwächung. Darüber hinaus erfordert eine derartige Rohrverbindungsvorrichtung aus Kunststoff zu ihrer Herstellung eigene, separate Spritzgusswerkzeuge, was zu hohen Herstellungskosten führt.

Damit besteht die Aufgabe der vorliegenden Erfindung darin, eine Vorrichtung zur axialen Fixierung einer Verbindung zwischen einem Rohr mit einer Steckmuffe und einem Rohrbauteil mit einem in die Steckmuffe eingeführten Spitzende zur Verfügung zu stellen, das die Nachteile des Stands der Technik überwindet. Insbesondere soll die erfindungsgemäße Vorrichtung kostengünstig, möglichst aus Standardbauteilen herstellbar sein, leicht montierbar und demontierbar sein, bei Verbindungen zwischen Rohren untereinander und zwischen Rohren und Rohrformteilen einsetzbar sein und zu keiner Beschädigung der Rohrwandungen führen.

Diese und andere Aufgaben werden durch eine Verbindung mit den Merkmalen des Anspruchs 1 gelöst. Bevorzugte Ausführungsformen der erfindungsgemäßen Verbindung sind in den abhängigen Ansprüchen beschrieben.

Gemäß der vorliegenden Erfindung wurde erkannt, dass eine Verbindung zwischen einem Rohr mit einer Steckmuffe und einem weiteren Rohr mit einem Spitzende bzw. einem Rohrformteil mit einem Spitzende, wobei das Spitzende jeweils unter Formschluss in die Steckmuffe einsteckbar ist, in axialer Richtung durch eine Vorrichtung fixiert werden kann, bei der die Innenseite einer Rohrschelle, vorzugsweise aus Metall, zumindest teilweise an dem Rohr anliegt und dabei einen umlaufenden Bund der Steckmuffe hintergreift, wobei axiale Verbindungselemente, vorzugsweise aus Metall, mit der Rohrschelle verbunden sind, die den Verbindungsbereich in axialer Richtung überspannen, und an dem anderen Rohr bzw. dem Rohrformteil ein Befestigungsmittel, vorzugsweise aus Metall, vorhanden ist. Das Befestigungsmittel ist dabei mit jeweils einem Ende der axialen Verbindungselemente verbunden und liegt an dem anderen Rohr bzw. dem Rohrformteil an. Die Vorrichtung aus Rohrschelle, damit verbundenen axialen Verbindungselementen und wiederum damit verbundenen Befestigungsmitteln gewährleistet eine sichere axiale Fixierung der Verbindung und kann leicht montiert oder demontiert werden. Durch die Verwendung einer Rohrschelle und weiteren einfachen Bauteilen ist die Verbindung kostengünstig herstellbar. Da es sich bei den für die Vorrichtung verwendeten Bauteilen vollständig um Standardbauteile handelt, ist dafür kein separates Werkzeug, insbesondere kein separates Spritzgusswerkzeug notwendig, was die Verwendung der erfindungsgemäßen Vorrichtung kostengünstig macht.

Dementsprechend liegt die vorliegende Erfindung in der Bereitstellung einer Vorrichtung zur axialen Fixierung einer Verbindung zwischen einem Rohr mit einer Steckmuffe und einem Rohrbauteil mit einem in die Steckmuffe eingesteckten Spitzende, wobei die Vorrichtung eine Rohrschelle, deren Innenseite zumindest teilweise an dem Rohr anliegt und dabei einen umlaufenden Bund der Steckmuffe hintergreift, mindestens zwei axiale Verbindungselemente, die an einem Ende mit der Rohrschelle verbunden sind; und mindestens ein Befestigungsmittel, das jeweils mit dem anderen Ende der axialen Verbindungselemente verbunden ist und das zumindest teilweise an dem Rohrbauteil anliegt, umfasst. Darüber hinaus liegt die vorliegende Verbindung in der Bereitstellung einer Verbindung zwischen einem Rohr mit einer Steckmuffe und einem Rohrbauteil mit einem in die Steckmuffe eingesteckten Spitzende, wobei die Verbindung eine derartige Vorrichtung zur axialen Fixierung umfasst.

In Bezug auf die erfindungsgemäße Vorrichtung kann es von Vorteil sein, wenn die Rohrschelle zwei zueinander komplementäre Halbschalen umfasst. Eine derartige Ausgestaltung der Rohrschelle ermöglicht den Aufbau der erfindungsgemäßen Vorrichtung aus besonders einfachen Bestandteilen.

Es kann auch hilfreich sein, wenn an die Rohrschelle Verbindungslaschen angeformt sind, über die die axialen Verbindungselemente mit der Rohrschelle verbunden sind. Dabei kann es sich als besonders günstig erweisen, wenn die Verbindungslaschen jeweils eine Bohrung aufweisen und die axialen Verbindungselemente jeweils an ihrem mit der Rohrschelle verbundenen Ende eine Bohrung aufweisen, wobei die Verbindung zwischen Verbindungslaschen und axialen Verbindungselementen derart ausgebildet ist, dass ein Haltemittel durch die Bohrungen in mindestens einer Verbindungslasche und in einem Ende eines der axialen Verbindungselemente geführt ist. Eine derartige Vorrichtung hat sich in der Praxis als besonders stabil bei kostengünstiger Herstellung erwiesen.

Es liegt nicht im Rahmen der vorliegenden Erfindung, dass das Rohrbauteil ein Rohr mit einem unter Formschluss in die Steckmuffe einführbaren Spitzende ist. Dabei wäre es besonders bevorzugt, wenn das Befestigungsmittel eine Rohrschelle ist, deren Innenseite zumindest teilweise an dem Rohr anliegt. Auf diese Weise wäre eine einfache Vorrichtung aus gängigen Bauteilen gegeben, die eine stabile axiale Fixierung einer Rohrverbindung gewährleistet.

Gemäß der vorliegenden Erfindung ist das Rohrbauteil ein Muffenstopfen mit einem unter Formschluss in die Steckmuffe einführbaren Spitzende. Dabei ist das Befestigungsmittel ein Halteblech, dessen eine Oberfläche zumindest teilweise auf einem Deckelbereich des Muffenstopfens anliegt. Das Halteblech kann dabei verstärkt (beispielsweise durch Wellung in Querrichtung) oder unverstärkt sein. In diesem Zusammenhang kann es auch hilfreich sein, wenn die axialen Verbindungselemente an ihrem dem Muffenstopfen zugewandten Ende durch jeweils eine Bohrung in dem Halteblech geführt sind. Dabei ist es besonders bevorzugt, wenn die axialen Verbindungselemente an ihrer dem Muffenstopfen zugewandten Ende ein Gewinde aufweisen, mit dem ein Befestigungsmittel zur Befestigung am Halteblech in Eingriff bringbar ist. Auf diese Weise kann die erfindungsgemäße Vorrichtung als eine einfache und stabile Muffenstopfensicherung eingesetzt werden.

Im Folgenden soll die vorliegende Erfindung unter Bezugnahme auf die in den Figuren dargestellten Ausführungsformen im Detail erläutert werden.

### Kurze Beschreibung der Zeichnungen

- Figur 1: zeigt eine perspektivische Ansicht einer Verbindung zweier Rohre.
- Figur 2: zeigt eine perspektivische Ansicht einer Verbindung zwischen einem Rohr und einem Muffenstopfen gemäß einer Ausführungsform der vorliegenden Erfindung.

### Detaillierte Beschreibung bevorzugter Ausführungsformen

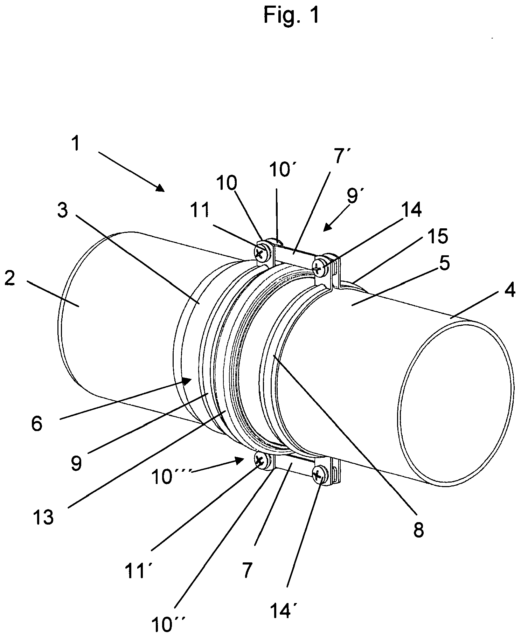

In Fig. 1 ist eine Verbindung 1 zwischen zwei Rohren 2, 4 in einer perspektivischen Ansicht gezeigt.

Die Rohre 2, 4 sind vorzugsweise Abwasserrohre aus Kunststoff, beispielsweise Polypropylen (PP), vorzugsweise mit einem Durchmesser von 40 mm bis 160 mm und einer Wandstärke von 1,8 mm bis 3,9 mm. Das Rohr 2 weist an einem Ende eine Steckmuffe 3 mit einem umlaufenden Bund 13 auf. In die Steckmuffe 3 ist ein Spitzende 5 des Rohres 4 eingefügt, wobei der Spalt zwischen den Rohren 2 und 4 über einen in einer Sicke angeordneten, radial umlaufenden Dichtungsring abgedichtet ist. Vorzugsweise weist jedes Rohr 2, 4 an einem Ende eine Steckmuffe 3 und am anderen Ende ein dazu passendes Spitzende 5 auf, so dass sich Rohrketten aus baugleichen Rohren bilden lassen. In axialer Richtung liegt hinter dem umlaufenden Bund 13 der Steckmuffe 3 eine Rohrschelle 6, vorzugsweise aus Metall, an dem Rohr 2 an. Die Rohrschelle 6 ist aus zwei zueinander identischen Halbschalen 9, 9' aufgebaut, an deren beiden Enden jeweils eine Verbindungslasche 10, 10', 10", 10'" mit einer Bohrung angeformt ist. Dabei sind jeweils zwei der Verbindungslaschen 10 und 10' sowie 10" und 10'" aneinandergefügt, wodurch sich die beiden Halbschalen 9, 9' zur Rohrschelle 6 ergänzen. Der Innendurchmesser der Rohrschelle 6 entspricht dem Außendurchmesser eines Teiles des Rohres 2, so dass die Innenseite der Rohrschelle 6 am Rohr 2 anliegt. Gleichzeitig ist der Innendurchmesser der Rohrschelle 6 kleiner als der Außendurchmesser des umlaufenden Bunds 13, so dass die Rohrschelle den umlaufenden Bund 13 der Steckmuffe 3 hintergreift. Dadurch kann die Rohrschelle 6 im geschlossenen Zustand über den umlaufenden Bund 13 nicht über das Ende des Rohres 2 gezogen werden.

Zwischen jeweils zwei aneinandergefügten Verbindungslaschen 10 und 10' sowie 10" und 10'" ist jeweils ein Ende von als Verbindungsblechen ausgebildeten axialen Verbindungselementen 7, 7' eingebracht, wobei diese Enden der Verbindungsbleche wiederum eine Bohrung aufweisen. Die Bohrungen in den Verbindungslaschen auf jeder Seite der Rohrschelle 6 sowie die Bohrung in dem einen Ende des Verbindungsbleches auf dieser Seite der Rohrschelle 6 liegen jeweils übereinander. Zur Fixierung ist durch die übereinander liegenden Bohrungen jeweils ein vorzugsweise als Schraube ausgeführtes Haltemittel 11, 11' geführt, deren offenes Ende mit einer Mutter festgezogen sein kann. Die Schrauben mit Mutter können teilweise oder komplett auch durch andere Haltemittel wie Befestigungsstifte, vorzugsweise gekonterte Befestigungsstifte ersetzt werden.

Die Verbindungsbleche 7, 7' erstrecken sich in axialer Richtung über den Verbindungsbereich der beiden Rohre 2, 4. Das andere Ende der beiden Verbindungsbleche 7, 7' weist ebenfalls eine Bohrung auf. Über jeweils ein durch diese Bohrung geführtes, wiederum bevorzugt als Schraube ausgeführtes Haltemittel 14, 14' sind die Verbindungsbleche 7, 7' mit einer weiteren Rohrschelle 15 verbunden, die identisch zur Rohrschelle 6 ausgeführt ist und als Befestigungsmittel 8 fungiert. Damit ist die Rohrschelle 15, vorzugsweise aus Metall, ebenfalls aus zwei zueinander identischen Halbschalen aufgebaut, an deren beiden Enden jeweils eine Verbindungslasche mit einer Bohrung angeformt ist. Die Verbindungslaschen sind paarweise aneinandergefügt, wobei zwischen je zwei aneinandergefügten Verbindungslaschen jeweils das andere Ende der Verbindungsbleche 7, 7' eingefügt ist, wobei diese Enden der Verbindungsbleche 7, 7' wiederum eine Bohrung aufweisen. Diese Bohrungen liegen mit den Bohrungen in den Verbindungslaschen auf der entsprechenden Seite der Rohrschelle 15 übereinander. Durch die übereinander liegenden Bohrungen ist zur Festlegung jeweils das vorzugsweise als Schraube ausgeführte Haltemittel 14, 14' geführt, dessen offenes Ende jeweils mit einer Mutter festgezogen sein kann. Die Schrauben (ggf. mit Mutter) können teilweise oder komplett auch durch andere Haltemittel 14, 14' wie gekonterte Befestigungsstifte ersetzt werden. Der Innendurchmesser der Rohrschelle 15 entspricht dem Außendurchmesser in einem Bereich des Rohres 4, so dass die Innenseite der Rohrschelle 15 am Rohr 4 anliegt.

In alternativen Ausführungsformen kann die voranstehend in Bezug auf Fig. 1 beschriebene Vorrichtung aus Rohrschelle 6, zwei axialen Verbindungselementen 7, 7' und als Rohrschelle 15 ausgebildetem Befestigungsmittel auch zur axialen Fixierung einer Verbindung 1 zwischen den Spitzenden 5 zweier Rohre 2, 4 verwendet werden. Dabei sind die Spitzenden 5 der Rohre 2, 4 einander zugewandt und ihr Verbindungsbereich ist durch ein Dichtmittel, beispielsweise eine Gummimanschette, abgedichtet. Der Durchmesser der Rohrschellen 6, 15 ist dabei so gewählt, dass die Innenfläche der Rohrschelle 6 zumindest teilweise am Rohr 2 anliegt und die Innenfläche der Rohrschelle 15 zumindest teilweise am Rohr 4 anliegt.

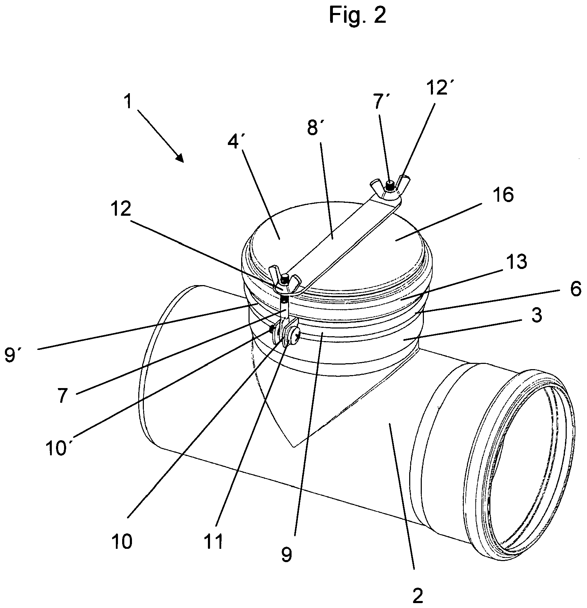

In Fig. 2 ist eine Verbindung 1 zwischen einem Rohr 2 und einem Muffenstopfen 4' gemäß einer Ausführungsform der vorliegenden Erfindung in einer perspektivischen Ansicht gezeigt. Vorzugsweise ist das Rohr 2 wiederum ein Abwasserrohr aus Kunststoff, beispielsweise Polypropylen (PP), vorzugsweise mit einem Durchmesser von 40 mm bis 160 mm und einer Wandstärke von 1,8 mm bis 3,9 mm. In dieser Ausführungsform weist das Rohr 2 orthogonal zur Fließrichtung des Fluids im Rohr 2 eine Steckmuffe 3 mit einem umlaufenden Bund 13 auf, wodurch eine weitere Anschlussmöglichkeit an das Rohr 2 gebildet wird. Über eine weitere Steckmuffe ist das Rohr 2 mit dem Spitzende eines weiteren Rohr verbindbar, sodass Rohrketten aufgebaut werden können. In die Steckmuffe 3 ist ein Spitzende 5 des Muffenstopfens 4' eingeführt. In axialer Richtung der Verbindung 1 liegt hinter dem umlaufenden Bund 13 der Steckmuffe 3 eine Rohrschelle 6, vorzugsweise aus Metall, an dem Rohr 2 an. Die Spalte zwischen dem Rohr 2 und Muffenstopfen 4' bzw. dem Rohr 2 und einem weiteren Rohr sind über je mindestens einen jeweils in einer Sicke angeordneten, radial umlaufenden Dichtungsring abgedichtet. Im Bereich der Sicke kann der Muffenstopfen eine oder mehrere (bspw. zwei) Aussparungen aufweisen.

Die Rohrschelle 6 ist aus zwei zueinander identischen Halbschalen 9, 9' aufgebaut, an deren beiden Enden jeweils eine Verbindungslasche 10, 10', 10", 10'" mit einer Bohrung angeformt ist. Dabei sind zwei jeweils die Verbindungslaschen 10 und 10' sowie 10" und 10'" (nicht abgebildet) aneinandergefügt, wodurch sich die beiden Halbschalen 9, 9' zur Rohrschelle 6 ergänzen. Der Innendurchmesser der Rohrschelle 6 entspricht dem Außendurchmesser eines Bereiches des Rohres 2, so dass die Innenseite der Rohrschelle 6 am Rohr 2 anliegt. Gleichzeitig ist der Innendurchmesser der Rohrschelle 6 kleiner als der Außendurchmesser des umlaufenden Bunds 13, so dass die Rohrschelle den umlaufenden Bund 13 der Steckmuffe 3 hintergreift. Dadurch kann die Rohrschelle 6 im geschlossenen Zustand über den umlaufenden Bund 13 nicht über das Ende des Rohres 2 gezogen werden.

Zwischen jeweils zwei aneinandergefügten Verbindungslaschen 10 und 10' sowie 10" und 10'" ist jeweils ein Ende von als Augenschrauben ausgebildeten axialen Verbindungselementen 7, 7' eingebracht. Diese Enden der Augenschrauben 7, 7' weisen eine Öffnung auf. Die Bohrungen in den Verbindungslaschen auf jeder Seite der Rohrschelle 6 sowie die Öffnung in dem einen Ende der Augenschraube 7, 7' auf der jeweiligen Seite der Rohrschelle 6 liegen übereinander. Zur Fixierung ist durch die übereinander liegenden Bohrungen und die Öffnung jeweils ein als Schraube ausgeführtes Haltemittel 11, 11' geführt, deren offenes Ende optional mit einer Mutter festgezogen sein kann. Die Schrauben mit Mutter können teilweise oder komplett auch durch andere Haltemittel wie gekonterte Befestigungsstifte ersetzt werden.

Die Augenschrauben 7, 7' erstrecken sich in axialer Richtung über den Verbindungsbereich zwischen dem Rohr 2 und dem Muffenstopfen 4'. Das andere Ende der beiden Augenschrauben 7, 7' weist ein Gewinde auf. Im Bereich der Gewinde sind die Augenschrauben 7, 7' jeweils durch eine Bohrung in den Außenbereichen eines als Halteblech 8' ausgeführten Befestigungsmittels geführt, das mit einer Fläche zumindest teilweise an einem Deckelbereich 16 des Muffenstopfens 4' anliegt und sich über den gesamten Durchmesser des Muffenstopfens 4' erstreckt.

Das Halteblech 8' kann dabei verstärkt oder unverstärkt ausgeführt sein. In bevorzugten Ausführungsformen ist das Halteblech 8' an einer Seite im Bereich der Bohrung geschlitzt ausgeführt, um ein seitliches Einschwenken bei der Montage zu ermöglichen. Um ein Herausrutschen zu verhindern, kann der Einführungsschlitz des Halteblechs 8' abgekantet ausgebildet sein. Zur Fixierung des Halteblechs 8' auf beiden Seiten ist jeweils ein Fixierungsmittel, vorzugsweise eine Mutter oder einer Flügelmutter 12, 12', in den über das Halteblech 8' hinausragenden Teil des Gewindes der Augenschrauben 7, 7' eingeschraubt und gegen das Halteblech 8' festgezogen.

Die vorliegende Erfindung bietet eine kostengünstige, leicht montierbare und demontierbare Möglichkeit zur axialen Fixierung einer Verbindung zwischen einem Rohr und einem Rohrbauteil, wobei durch die Fixierung weder das Rohr noch das Rohrbauteil geschwächt werden. Eine derartige axiale Fixierung sichert die Verbindungen vor einem unbeabsichtigten Auseinanderziehen der Bestandteile beispielsweise bei großen Fallhöhen und bei Druckentwässerungen (Hebeanlagen, Unterdruckdachentwässerung).

## Patentansprüche

1. Verbindung (1) umfassend ein Rohr (2) mit einer Steckmuffe (3) und ein Rohrbauteil (4) mit einem in die Steckmuffe (3) eingesteckten Spitzende (5), wobei die Verbindung (1) eine Vorrichtung zur axialen Fixierung der Verbindung (1) zwischen dem Rohr (2) mit der Steckmuffe (3) und dem Rohrbauteil (4, 4') mit dem in die Steckmuffe (3) eingesteckten Spitzende (5) umfasst, wobei die Vorrichtung
- eine Rohrschelle (6), deren Innenseite zumindest teilweise an dem Rohr (2) anliegt und dabei einen umlaufenden Bund (13) der Steckmuffe (3) hintergreift,
- mindestens zwei axiale Verbindungselemente (7, 7'), die an einem Ende mit der Rohrschelle (6) verbunden sind; und
- mindestens ein Befestigungsmittel (8, 8'), das jeweils mit dem anderen Ende der axialen Verbindungselemente (7, 7') verbunden ist und das zumindest teilweise an dem Rohrbauteil (4) anliegt,
umfasst, **dadurch gekennzeichnet, dass** das Rohrbauteil ein Muffenstopfen (4') mit einem unter Formschluss in die Steckmuffe (3) einführbaren Spitzende (5) ist und das Befestigungsmittel ein Halteblech (8') ist, dessen eine Oberfläche zumindest teilweise auf einem Deckelbereich (16) des Muffenstopfens (4') anliegt.

2. Verbindung (1) nach Anspruch 1, **dadurch gekennzeichnet, dass** die Rohrschelle (6) zwei zueinander komplementäre Halbschalen (9, 9') umfasst.

3. Verbindung (1) nach Anspruch 1 oder Anspruch 2, **dadurch gekennzeichnet, dass** an die Rohrschelle (6) Verbindungslaschen (10, 10', 10", 10"') angeformt sind, über die die axialen Verbindungselemente (7, 7') mit der Rohrschelle (6) verbunden sind.

4. Verbindung (1) nach Anspruch 3, **dadurch gekennzeichnet, dass** die Verbindungslaschen (10, 10', 10", 10"') jeweils eine Bohrung aufweisen und die axialen Verbindungselemente (7, 7') jeweils an ihrem mit der Rohrschelle (6) verbundenen Ende eine Bohrung aufweisen, wobei die Verbindung zwischen Verbindungslaschen (10, 10', 10", 10"') und axialen Verbindungselementen (7, 7') derart ausgebildet ist, dass ein Haltemittel (11, 11') durch die Bohrungen in mindestens einer Verbindungslasche (10, 10', 10", 10"') und in einem Ende eines der axialen Verbindungselemente (7, 7') geführt ist.

5. Verbindung (1) nach Anspruch 1, **dadurch gekennzeichnet, dass** die axialen Verbindungselemente (7, 7') an ihrer dem Muffenstopfen (4') zugewandten Ende durch jeweils eine Bohrung in dem Halteblech (8') geführt sind.

6. Verbindung (1) nach Anspruch 5, **dadurch gekennzeichnet, dass** die axialen Verbindungselemente (7, 7') an ihrer dem Muffenstopfen (4') zugewandten Ende ein Gewinde aufweisen, mit dem ein Befestigungsmittel (12, 12') zur Befestigung am Halteblech (8') in Eingriff bringbar ist.

## Claims

1. Connection (1) comprising a pipe (2) with a socket (3) and a pipe component (4) with a spigot (5), which is plugged into the socket (3), wherein the connection (1) comprises a device for axially fixing the connection (1) between the pipe (2) with the socket (3) and the pipe component (4, 4') with the spigot (5), which is plugged into the socket (3), wherein the device comprises
- a pipe clamp (6), of which the inner side butts, at least in part, against the pipe (2), and in the process, engages behind an encircling collar (13) of the socket (3),
- at least two axial connecting elements (7, 7'), which are connected at one end to the pipe clamp (6), and
- at least one fastening means (8, 8'), which is connected in each case to the other end of the axial connecting elements (7, 7') and butts, at least in part, against the pipe component (4),
**characterized in that**
the pipe component is a socket plug (4') with a spigot (5) which can be introduced, with a form fit, into the socket (3), and the fastening means is a metal retaining plate (8'), of which one surface butts at least in part against a cover region (16) of the socket plug (4').

2. Connection (1) according to Claim 1, **characterized in that** the pipe clamp (6) comprises two mutually complementary half-shells (9, 9').

3. Connection (1) according to Claim 1 or Claim 2, **characterized in that** connecting lugs (10, 10', 10", 10'"), by way of which the axial connecting elements (7, 7') are connected to the pipe clamp (6), are integrally formed on the pipe clamp (6).

4. Connection (1) according to Claim 3, **characterized in that** the connecting lugs (10, 10', 10", 10'") each have a bore and the axial connecting elements (7, 7') each have a bore at their end which is connected to the pipe clamp (6), wherein the connection between the connecting lugs (10, 10', 10", 10'") and axial connecting elements (7, 7') is formed such that a retaining means (11, 11') is guided through the bores in at least one connecting lug (10, 10', 10", 10"') and in one end of one of the axial connecting elements (7, 7').

5. Connection (1) according to Claim 1, **characterized in that**, at their end which is directed towards the socket plug (4'), the axial connecting elements (7, 7') are guided through a respective bore in the metal retaining plate (8').

6. Connection (1) according to Claim 5, **characterized in that**, at their end which is directed towards the socket plug (4'), the axial connecting elements (7, 7') have a thread with which the fastening means (12, 12') for fastening on the metal retaining plate (8') can be brought into engagement.

## Revendications

1. Raccordement (1) comprenant un tuyau (2) avec une douille d'enfichage (3) et un composant tubulaire (4) avec une extrémité en pointe (5) enfichée dans la douille d'enfichage (3), le raccordement (1) comprenant un dispositif pour la fixation axiale du raccordement (1) entre le tuyau (2) avec la douille d'enfichage (3) et le composant tubulaire (4, 4') avec l'extrémité en pointe (5) enfichée dans la douille d'enfichage (3), le dispositif comprenant
- un collier de serrage (6) dont le côté intérieur s'applique au moins en partie contre le tuyau (2) et vient en prise en l'occurrence par l'arrière avec un épaulement périphérique (13) de la douille d'enfichage (3),
- au moins deux éléments de raccordement axiaux (7, 7') qui sont raccordés à une extrémité au collier de serrage (6) ; et
- au moins un moyen de fixation (8, 8') qui est à chaque fois raccordé à l'autre extrémité des éléments de raccordements axiaux (7, 7') et qui s'applique au moins en partie contre le composant tubulaire (4),
**caractérisé en ce que**
le composant tubulaire est un bouchon de douille (4') avec une extrémité en pointe (5) pouvant être introduite par engagement par correspondance de formes dans la douille d'enfichage (3) et le moyen de fixation est une tôle de retenue (8') dont une surface s'applique au moins en partie sur une région de recouvrement (16) du bouchon de douille (4').

2. Raccordement (1) selon la revendication 1, **caractérisé en ce que** le collier de serrage (6) comprend deux demi-coques complémentaires l'une de l'autre (9, 9').

3. Raccordement (1) selon la revendication 1 ou la revendication 2, **caractérisé en ce que** des pattes de raccordement (10, 10', 10", 10'") sont façonnées sur le collier de serrage (6), par le biais desquelles les éléments de raccordement axiaux (7, 7') sont raccordés au collier de serrage (6).

4. Raccordement (1) selon la revendication 3, **caractérisé en ce que** les pattes de raccordement (10, 10', 10", 10'") présentent à chaque fois un alésage et les éléments de raccordement axiaux (7, 7') présentent à chaque fois un alésage au niveau de leur extrémité raccordée au collier de serrage (6), le raccordement entre les pattes de raccordement (10, 10', 10", 10'") et les éléments de raccordements axiaux (7, 7') étant réalisé de telle sorte qu'un moyen de retenue (11, 11') soit guidé à travers les alésages dans au moins une patte de raccordement (10, 10', 10", 10'") et dans une extrémité de l'un des éléments de raccordements axiaux (7, 7').

5. Raccordement (1) selon la revendication 1, **caractérisé en ce que** les éléments de raccordement axiaux (7, 7') sont guidés au niveau de leur extrémité tournée vers le bouchon de douille (4') à travers un alésage respectif dans la tôle de retenue (8').

6. Raccordement (1) selon la revendication 5, **caractérisé en ce que** les éléments de raccordements axiaux (7, 7') présentent au niveau de leur extrémité tournée vers le bouchon de douille (4') un filetage avec lequel un moyen de fixation (12, 12') peut être amené en prise pour la fixation à la tôle de retenue (8').
